# EUROPEAN PATENT SPECIFICATION

(11) **EP 0 836 802 B1**
(45) Date of publication and mention of the grant of the patent: **22.08.2001**
(21) Application number: 97203807.9
(22) Date of filing: 24.09.1992
(51) Int. Cl.: A01J 5/017, A01J 5/013

(54) **A method of and an implement for milking animals automatically**
Verfahren und Gerät zum automatischen Melken von Tieren
Méthode et appareil pour la traite automatique d'animaux

(30) Priority: 27.09.1991 NL 9101636
(43) Date of publication of application: 22.04.1998
(62) Divisional of application: 92202939.2
(73) Proprietor: MAASLAND N.V., 3155 PD Maasland (NL)
(72) Inventor: van den Berg, Karel, 2971 BR Bleskensgraaf (NL); Fransen, René, 3135 ZD Vlaardingen (NL)
(74) Representative: Corten, Maurice Jean F.M.

(56) References cited:
- EP-A- 0 360 354
- EP-A- 0 385 539
- GB-A- 2 218 888
- NL-A- 9 001 689
- US-A- 3 874 337
- US-A- 4 922 855

## Description

The present invention relates to a method of milking animals, especially cows, automatically, with a milking plant including a computer and making use of teat cups know from the document EP-A-0385 539. Such a method is improved in that, at randomly selectable times, the monitor display of the computer and/or a printer is capable of indicating the animals of which the dead time between the instant when one of the teat cups has been connected to a teat and the instant when the flow of milk from this teat has started has exceeded the respective predetermined value as well as the extent hereof.

The processing of the signals originating from the sensors by means of a computer permits that, at times randomly selectable by the farmer, it can be indicated on the monitor display of the computer and/or by means of a printer, for which animals and to what extent the dead time has exceeded its respective predetermined value. On the monitor display it can be depicted that e.g.:
a dead time for cow 15 has been established which was 13% in excess of a previously determined value, that a dead time for cow 38 has been established which was 8% in excess of a previously determined value, etc.

On the basis of information on electrical conductivity of a flow of milk, as given by the computer, the farmer can decide on whether the milk produced by a relevant animal has to be drained off, e.g. into a waste tank, or not. In the first case, the milk obtained from the animal is fed through a computer-controlled three-way valve in a relevant milk line and drained off into e.g. a waste tank instead of being fed into a milk tank. When it is possible to establish that any quarter of an animal's udder suffers from mastitis, this permits to discard only the milk from the quarter affected. This information, too, may be indicated on the monitor display or be printed; so, in addition to the aforementioned data on electrical conductivity and dead time, it can be indicated that e.g. milk from cow 2 is being discarded, that milk from cow 36 is being discarded, etc.

The time lapse from the instant when a teat cup is connected to a teat to the instant when the flow of milk from this teat starts is called the dead time. This dead time can be determined by means of a computer. Accordingly, the invention also relates to a method of milking animals, especially cows, automatically, where the dead time between the instant when one of the teat cups is connected to an appropriate teat and the instant when the flow of milk from this teat starts is determined by means of a computer. In particular, the dead time between the instant when the vacuum-sensitive sensor has established a sufficient vacuum in a teat cup applied to a relevant teat and the instant when a flow-sensitive sensor has detected that the flow of milk has got going is determined by means of a computer. It will be sufficient to determine the dead time with respect to the start of the milk flow in the teat cup applied last. The idea behind this is that the dead time with respect to the last teat cup will be much the same as the dead time determined for the application of the other teat cups. It will be more correct, however, to determine the dead time for the flow of milk from each of the teats.

In actual practice there appear to occur situations associated with the physical condition of the animals, which cause relatively large differences in dead times with regard to the start of the milk flows from the various teats. Of course, the situation where e.g. the last teat cup has not been applied correctly, or not at all, with the result that the animal cannot be milked at all, whilst the flows of milk in the teat cups connected first have already started, may occur at any time. Nevertheless, the animal should then leave the milking parlour. As far as the dead time(s) has (have) been established with regard to the flows of milk which did start, further conclusions may of course be drawn therefrom.

According to a further step of the method, the extent to which the dead time has exceeded a predetermined value for a relevant animal can be determined by means of the computer. In particular, for each of the flows of milk from the various teats, the extent to which dead time exceeds the predetermined value is determined. This predetermined value will be different not only for various animals, but it will also change as the animals grow old. The farmer, however, will be basically interested only in those cases where the predetermined value is exceeded. When an animal is oestrous or ill, the dead time will generally be longer than usual. If the predetermined value of the dead time has been exceeded by a certain percentage, the farmer has accordingly obtained an indication signal of the animal's heat or illness.

If a relatively long time, for example, twice the dead time determined previously for the animal, has elapsed after the vacuum in the teat cup has been established, then the computer draws the conclusion that the dead time cannot be determined, because the flow of milk has apparently not started, which may happen when an animal just milked has still entered the milking parlour again. The animal should then be led away from the milking parlour.

According to a further step, a more reliable indication signal of heat or illness is obtainable from parameters such as the milk rate of flow and/or temperature of a milk flow and/or the milk yield and/or the number of times per given time period that an animal pays a visit to the milking parlour and/or the food quantity consumed in the milking parlour, which parameters for ill or oestrous animals are different from those for healthy and non-oestrous animals, and possibly by combination of one or several such parameters with the dead time by means of a computer. In doing so, to achieve a higher accuracy, especially the temperatures of each of the flows of milk from the various teats can be determined. For the determination of the temperature, use is made of temperature-sensitive sensors to be arranged in the flow of milk. When the farmer has obtained an indication that the animal is ill or threatens to fall ill, it is important to know whether mastitis or any other disease is concerned. According to a further step, an indication that an animal suffers from mastitis can therefore be obtained in the computer by means of a sensor for electrical conductivity of the milk flow and, if necessary, also by means of a temperature-sensitive sensor. In particular, the electrical conductivity of the flow of milk from each of the teats can be determined. Furthermore, it can also be determined in the computer to what extent the electrical conductivity of a flow of milk has exceeded a predetermined value for a relevant animal. In order to exclude short-lived fluctuations as well as any highly gradual change in electrical conductivity of the flow of milk, this predetermined value is repeatedly redefined by the progressive average of the relevant values established in the immediately preceding period of time, for instance, that of the latest ten measurements of electrical conductivity made. As a matter of fact, this also applies to the predetermined threshold value of the dead time.

Not only can the flow-sensitive sensor be used for establishing that a flow of milk has started, but also for establishing that a flow of milk has stopped. According to a further step of method, such a stop of the flow of milk is indicated to the computer, which ensures that the relevant teat cup is disconnected after the lapse of a certain period of time, e.g. of 2 to 60 s, following the occurrence of this indication. In this way the milk yield from the individual teats can be established. The function of the flow-sensitive sensor can be taken over by a milk meter; especially when said meter is capable of determining in small increments the quantity of milk produced, it is possible to establish a characteristic of the milk yield, on account of which the starting and stopping times of the flow of milk can be determined. Then, however, it is desirable to have four milk meters to determine the milk yields from the individual teats.

The invention will now be further explained with reference to the embodiment represented in the accompanying drawings.
Figure 1 shows a schematic diagram of a milking plant in which the method according to the invention can be performed, while
Figure 2 is a teat cup drawn in detail.

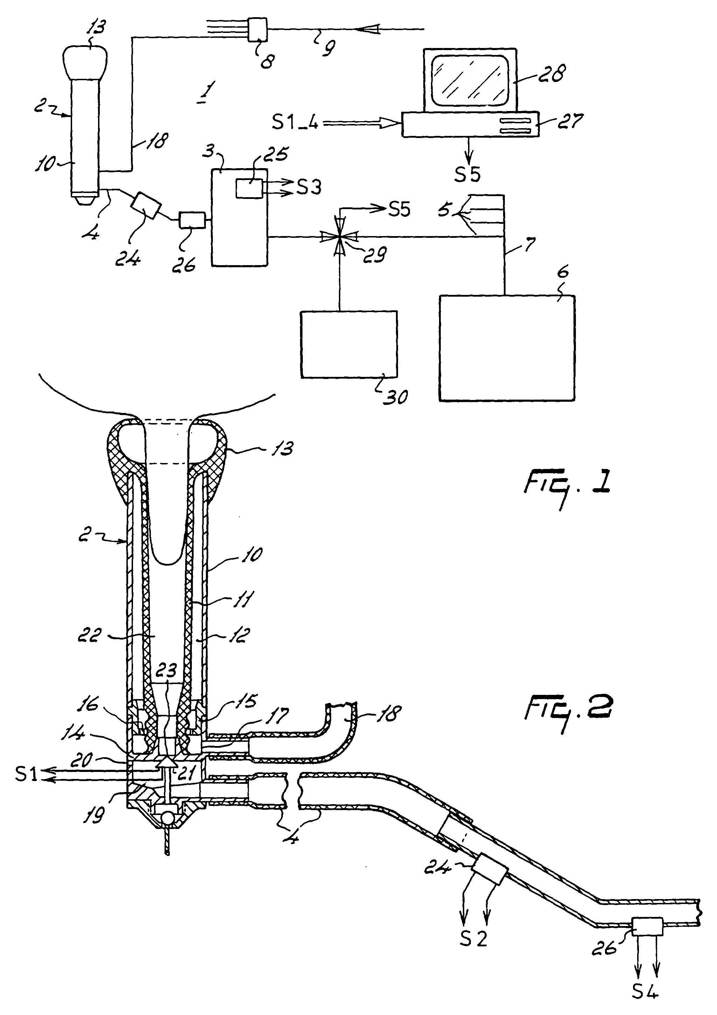

In Figure 1, a milking plant 1 for an implement for milking an animal automatically is depicted, with the representation of this milking plant being limited to only one teat cup 2 and one milk meter 3, for the sake of simplicity. The milk obtained from each udder quarter by means of teat cups 2 can be fed through a separate milk line 4 to a milk measuring apparatus comprising four milk meters 3. Separate discharge lines 5 of the milk meters 3 are connected to a common output line 7 running to a milk tank 6. A more elaborate basic set-up of the milking plant is depicted and described in EP-A-0 385 539. The milking plant further comprises, as far as matters are of importance to the present invention, a pulsator system 8 for the four teat cups 2. Vacuum line 9 for the pulsator system 8 is connected to a vacuum pump with equalizer tank, as is described in said European Patent Application.

In Figure 2, a longitudinal section of a teat cup 2 is shown; as is usual, the teat cup has been built up from a rigid, e.g. metal, sleeve 10, from an inner wall 11 made of a flexible material, such as rubber, located in this sleeve, and from a rubber cap 13 which closes off the top side of gap 12 between the sleeve 10 and the inner wall 11. The bottom side of the gap between the sleeve 10 and the inner wall 11 is closed by a sealing ring 14, whilst between the sleeve 10 and the inner wall, above said ring, there is provided a ring 15 having an opening 16. In between the sealing ring 14 and the ring 15 there is a space to which a pulsating vacuum is applied by the pulsator system 8 through a line 18 and an opening 17, giving rise to a pulsating vacuum in the space between the sleeve 10 and the inner wall 11, which pulsating vacuum causes alternately the inner wall to enclose the teat tightly and to move outwards, resulting in the rhythmic motion about the teat as required for milking, provided that the teat cup is correctly connected to this teat. To provide a buffer for the milk to be collected and to minimise fluctuations in the vacuum under the teat, there is provided a buffer space 19 in the bottom part of the teat cup, where a relatively narrow air intake aperture on behalf of the transport of milk is provided. The line 4 serving to drain the milk to the milk meter 3 is connected to this buffer space 19. Furthermore, in this buffer space 19 there is provided a stationary member 21 which partially projects into the opening between inner space 22 and the buffer space 19 to ensure that the milk gradually flows into buffer space 19 and any separation of the milk is prevented. On the top side of this member 21 there is provided a temperature-sensitive sensor 23 to make temperature measurements. The milk temperature, as may thus be established already in the teat cup 2, is a good measure of the body temperature; especially the body temperatures of ill animals, such as those affected by mastitis, are beyond the normal value. A flow-sensitive sensor 24 to establish the starting and stopping of the milk flow is included in a falling portion of the milk line 4. The operation of this flow-sensitive sensor is based on that a flow of milk makes an electrical connection between two electrodes. The inclined position of the sensor prevents milk from being left in between the electrodes, or to put it differently, it prevents that a little pool of milk remains in between the electrodes; for this would result in that a flow of milk is indicated uninterruptedly. The milk line 4 also includes a vacuum-sensitive sensor 26 to establish whether a sufficient vacuum prevails in the milk line 4 and the teat cup 2. In milk meter 3 there is provided a sensor to determine the electrical conductivity 25, this is the mastitis sensor. This mastitis sensor comprises a reservoir provided with electrodes to measure the electrical conductivity of milk being in the reservoir. With each new flow of milk, the milk being in the reservoir is replaced. If the milk is affected, a higher electrical conductivity is established. As with every new flow of milk a slight increase in the electrical conductivity is observed in the beginning, it is possible to establish when a flow of milk starts, too, by means of this mastitis sensor in the place of, or in addition to, the flow-sensitive sensor. The output signals S1, S2, S3 and S4 of the respective sensors 23, 24, 25 and 26 are applied to a computer 27, where the information from these sensors is further processed and made knowable on the display screen of a monitor 28. The discharge line 5 is further provided with a three-way valve 29 to be able to drain the flow of milk from a quarter of the animal's udder affected by mastitis off into a waste tank 30. When the farmer decides to send milk to the waste tank 30 on account of information made knowable by the computer and he issues an appropriate command to the computer to do so, the three-way valve 29 is changed over by means of a signal S5 produced by the computer.

## Claims

1. A method of milking animals, especially cows, automatically, with a milking plant including a computer and making use of teat cups, characterized in that, at randomly selectable times, the monitor display of the computer and/or a printer is capable of indicating the animals of which the dead time between the instant when one of the teat cups has been connected to a teat and the instant when the flow of milk from this teat has started, has exceeded the respective predetermined value as well as the extent hereof.

2. A method as claimed in claim 1, characterized in that on the basis of the information on the dead time, in combination with information on electrical conductivity and/or the temperature of a flow of milk given by the computer, it is decided on whether the milk produced by a relevant animal has to be drained off, e.g. into a waste tank, or not.

3. A method as claimed in claim 2, characterized in that the milk obtained from an animal is fed through a computer-controlled three-way valve in a relevant milk line into a milk tank or is drained off into e.g. a waste tank.

4. A method as claimed in claim 2 or 3, characterized in that mastitis in any one of the quarters is capable of being established by means of a sensor provided for each quarter of an animal's udder in a relevant teat cup or in the line connected to this teat cup.

5. A method as claimed in claim 4, characterized in that, after mastitis in at least one of the quarters of the animal's udder has been established through a relevant sensor, the milk produced by the teats of the quarters affected is discarded.

6. A method as claimed in any one of claims 1 to 5, characterized in that the dead time between the instant when any one of the teat cups is connected to a relevant teat and the instant when the flow of milk from this teat has started is determinable by means of a computer.

7. A method as claimed in claim 6, characterized in that the dead time between the instant when a vacuum-sensitive sensor has established a sufficient vacuum in a teat cup applied to a relevant teat and the instant when the start of a flow of milk from this teat has been established by a flow-sensitive sensor is established by means of the computer.

8. A method as claimed in claim 6 or 7, characterized in that the dead time for the flow of milk from each of the teats is established.

9. A method as claimed in any one of claims 6 to 8, characterized in that the extent to which the dead time exceeds a predetermined value for a relevant animal is determined by means of the computer.

10. A method as claimed in claim 9, characterized in that the extent to which the dead time exceeds the predetermined value for each of the flows of milk from the respective teats is determined.

11. A method as claimed in any one of the claims 6 to 10, characterized in that the animal is led away from the location where automatic milking is intended to take place, when, after the creation of a vacuum in a teat cup, a particular time in relation to the dead time previously determined for the relevant animal has elapsed without the flow of milk in this cup having started.

12. A method as claimed in any one of claims 6 to 11, characterized in that by means of the computer an indication of heat or illness of the animal is obtained from the dead time.

13. A method as claimed in claim 12, characterized in that an indication of heat or illness of an animal is obtained from parameters, such as the milk rate of flow and/or the milk yield and/or the number of times in a certain period of time that an animal enters the milking parlour and/or the food quantity consumed in the milking parlour, which parameters for ill or oestrous animals are different from those for healthy and non-oestrous animals and possibly by combining one or several such parameters with the dead time by means of a computer.

14. A method as claimed in claim 12 or 13, characterized in that the temperature of each of the flows of milk from the respective teats is established.

15. A method as claimed in any one of claims 13 or 14, characterized in that the temperature of a flow of milk is established by means of a temperature-sensitive sensor to be provided in the flow of milk.

16. A method as claimed in any one of claims 6 to 15, characterized in that a flow-sensitive sensor indicates when a flow of milk from a teat stops, with the relevant teat cup being disconnected by means of a computer after this indication.

17. A method as claimed in any one of claims 6 to 16, characterized in that an indication of mastitis in an animal is obtainable in the computer by means of a sensor for establishing the electrical conductivity of a flow of milk and also, if desirable, by means of a temperature-sensitive sensor.

18. A method as claimed in claim 17, characterized in that the electrical conductivity of the flow of milk from each of the teats is established.

19. A method as claimed in claim 17 or 18, characterized in that the extent to which the electrical conductivity of a flow of milk exceeds a previously determined value hereof for a relevant animal is established in the computer.

20. A method as claimed in claim 19, characterized in that, for each of the flows of milk from the respective teats, the extent to which the electrical conductivity exceeds the predetermined value is established.

21. A method as claimed in any one of claims 9, 10, 19 or 20, characterized in that the predetermined value is repeatedly determined anew by the progressive average of the relevant values established in the immediately preceding period of time.

22. A method as claimed in any one of claims 17 to 21, characterized in that, at randomly selectable times, the monitor display of the computer and/or a printer is capable of indicating the animals of which the dead time and/or the electrical conductivity of a flow of milk have/has exceeded the respective predetermined values and the extent hereof.

## Patentansprüche

1. Verfahren zum automatischen Melken von Tieren, insbesondere von Kühen, mit einer Melkanlage und einem Computer und unter Verwendung von Zitzenbechern,
dadurch gekennzeichnet, daß zu beliebig festzulegenden Zeitpunkten auf dem Bildschirm des Computers und/oder über einen Drucker eine Anzeige darüber zu erzielen ist, bei welchen Tieren und um welches Maß die Totzeit zwischen dem Zeitpunkt, zu dem einer der Zitzenbecher an eine Zitze angeschlossen wurde, und dem Zeitpunkt, zu dem der Milchfluß aus dieser Zitze eingesetzt hat, den zugehörigen vorgegebenen Wert überschritten hat.

2. Verfahren nach Anspruch 1,
dadurch gekennzeichnet, daß aufgrund der von dem Computer gelieferten Information über die Totzeit in Kombination mit Informationen über die elektrische Leitfähigkeit und/oder die Temperatur eines Milchflusses darüber entschieden wird, ob die von einem zugehörigen Tier abgegebene Milch beispielsweise in einen Ausschußbehälter abzuleiten ist oder nicht.

3. Verfahren nach Anspruch 2,
dadurch gekennzeichnet, daß die von einem Tier gewonnene Milch über ein in einer zugehörigen Milchleitung angeordnetes computergesteuertes Dreiwegeventil in einen Milchtank oder beispielsweise in einen Ausschußbehälter geleitet wird.

4. Verfahren nach Anspruch 2 oder 3,
dadurch gekennzeichnet, daß Mastitis in einem der Euterviertel mittels eines Sensors feststellbar ist, der für jedes Viertel eines Tiereuters in einem zugehörigen Zitzenbecher oder in der an diesen Zitzenbecher angeschlossenen Leitung angeordnet ist.

5. Verfahren nach Anspruch 4,
dadurch gekennzeichnet, daß nach Feststellen von Mastitis in mindestens einem Viertel des Tiereuters mittels eines entsprechenden Sensors die von den Zitzen der infizierten Euterviertel abgegebene Milch ausgesondert wird.

6. Verfahren nach einem der Ansprüche 1 bis 5,
dadurch gekennzeichnet, daß die Totzeit zwischen dem Zeitpunkt, zu dem einer der Zitzenbecher an eine zugehörige Zitze angeschlossen wird, und dem Zeitpunkt, zu dem der Milchfluß aus dieser Zitze eingesetzt hat, mittels eines Computers feststellbar ist.

7. Verfahren nach Anspruch 6,
dadurch gekennzeichnet, daß die Totzeit zwischen dem Zeitpunkt, zu dem ein auf Vakuum ansprechender Sensor ein ausreichendes Vakuum in einem an eine zugehörige Zitze angeschlossenen Zitzenbecher festgestellt hat, und dem Zeitpunkt, zu dem das Einsetzen eines Milchflusses aus dieser Zitze von einem Strömungssensor festgestellt worden ist, mittels des Computers ermittelt wird.

8. Verfahren nach Anspruch 6 oder 7,
dadurch gekennzeichnet, daß die Totzeit in bezug auf den Milchfluß aus jeder einzelnen Zitze ermittelt wird.

9. Verfahren nach einem der Ansprüche 6 bis 8,
dadurch gekennzeichnet, daß das Maß, um welches die Totzeit einen für ein bestimmtes Tier vorgegebenen Wert überschreitet, durch den Computer ermittelt wird.

10. Verfahren nach Anspruch 9,
dadurch gekennzeichnet, daß das Maß ermittelt wird, um welches die Totzeit den für den jeweiligen Milchfluß aus den zugehörigen Zitzen vorgegebenen Wert überschreitet.

11. Verfahren nach einem der Ansprüche 6 bis 10,
dadurch gekennzeichnet, daß das Tier von dem Ort weggeführt wird, an dem das automatische Melken stattfinden soll, wenn nach Erzeugen eines Vakuums in einem Zitzenbecher ein bestimmter Zeitraum im Verhältnis zu der für das betreffende Tier zuvor festgelegten Totzeit verstrichen ist, ohne daß der Milchfluß in diesem Becher eingesetzt hat.

12. Verfahren nach einem der Ansprüche 6 bis 11,
dadurch gekennzeichnet, daß anhand der Totzeit mittels des Computers eine Anzeige bezüglich Brunst oder Krankheit des Tieres erzielt wird.

13. Verfahren nach Anspruch 12,
dadurch gekennzeichnet, daß eine Anzeige bezüglich Brunst oder Krankheit eines Tieres aufgrund von Parametern erzielt wird, wie z. B. die Milchdurchflußmenge und/oder der Milchertrag und/oder die Häufigkeit, mit der ein Tier innerhalb eines bestimmten Zeitraumes den Melkstand aufsucht, und/oder die in dem Melkstand verbrauchte Futtermenge, wobei sich die Parameter für kranke oder brünstige Tiere von denen für gesunde und nicht brünstige Tiere unterscheiden, und wobei einer oder mehrere dieser Parameter mittels eines Computers eventuell mit der Totzeit kombiniert werden.

14. Verfahren nach Anspruch 12 oder 13,
dadurch gekennzeichnet, daß die Temperatur des jeweiligen Milchflusses aus den betreffenden Zitzen ermittelt wird.

15. Verfahren nach einem der Ansprüche 13 oder 14,
dadurch gekennzeichnet, daß die Temperatur eines Milchflusses mittels eines in dem Milchfluß anzuordnenden Temperatursensors ermittelt wird.

16. Verfahren nach einem der Ansprüche 6 bis 15,
dadurch gekennzeichnet, daß durch einen Strömungssensor eine Anzeige erfolgt, wenn ein Milchfluß aus einer Zitze versiegt, und daß im Anschluß an diese Anzeige der betreffende Zitzenbecher mittels eines Computers abgenommen wird.

17. Verfahren nach einem der Ansprüche 6 bis 16,
dadurch gekennzeichnet, daß eine Anzeige bezüglich Mastitis bei einem Tier in dem Computer mittels eines Sensors zu erzielen ist, der auf die elektrische Leitfähigkeit eines Milchflusses anspricht, und, falls gewünscht, auch mittels eines Temperatursensors.

18. Verfahren nach Anspruch 17,
dadurch gekennzeichnet, daß die elektrische Leitfähigkeit des Milchflusses aus jeder einzelnen Zitze ermittelt wird.

19. Verfahren nach Anspruch 17 oder 18,
dadurch gekennzeichnet, daß in dem Computer das Maß ermittelt wird, um welches die elektrische Leitfähigkeit eines Milchflusses einen für ein zugehöriges Tier zuvor festgesetzten Wert überschreitet.

20. Verfahren nach Anspruch 19,
dadurch gekennzeichnet, daß für jeden einzelnen Milchfluß aus den betreffenden Zitzen das Maß ermittelt wird, um welches die elektrische Leitfähigkeit den vorgegebenen Wert überschreitet.

21. Verfahren nach einem der Ansprüche 9, 10, 19 oder 20,
dadurch gekennzeichnet, daß der vorgegebene Wert anhand des immer wieder neu errechneten Durchschnittes der betreffenden Werte, die während des unmittelbar vorausgegangenen Zeitraumes ermittelt wurden, ständig von neuem festgesetzt wird.

22. Verfahren nach einem der Ansprüche 17 bis 21,
dadurch gekennzeichnet, daß zu beliebig festzulegenden Zeitpunkten auf dem Bildschirm des Computers und/oder über einen Drucker eine Anzeige darüber zu erzielen ist, bei welchen Tieren und um welches Maß die Totzeit und/oder die elektrische Leitfähigkeit eines Milchflusses die jeweils vorgegebenen Werte überschritten haben/hat.

## Revendications

1. Procédé de traite automatique d'animaux, en particulier des vaches, à l'aide d'une installation de traite comportant un ordinateur et utilisant des gobelets trayeurs, caractérisé en ce que, à des instants pouvant être sélectionnés au hasard, l'écran d'affichage de l'ordinateur et/ou une imprimante peuvent indiquer les animaux dont le temps mort entre l'instant où l'un des gobelets trayeurs a été connecté à un trayon et l'instant où l'écoulement de lait qui a commencé à partir de ce trayon a dépassé la valeur respective prédéterminée, de même que son étendue.

2. Procédé selon la revendication 1, caractérisé en ce que sur la base des informations concernant le temps mort, en combinaison des informations concernant la conductivité électrique et/ou la température d'un écoulement de lait fournies par l'ordinateur, on décide si le lait produit par un animal concerné doit être évacué, par exemple dans un réservoir de rejet, ou pas.

3. Procédé selon la revendication 2, caractérisé en ce que le lait obtenu à partir d'un animal est alimenté à travers une vanne à trois voies commandée par ordinateur dans une ligne de lait concernée jusqu'à dans un réservoir de lait, ou est évacué par exemple dans un réservoir de rejet.

4. Procédé selon la revendication 1 ou 2, caractérisé en ce qu'une mastite dans l'un quelconque des quarts de pis peut être établie par l'intermédiaire d'un capteur fourni pour chaque quart de pis du pis d'un animal dans un gobelet trayeur concerné, ou dans la ligne connectée à ce gobelet trayeur.

5. Procédé selon la revendication 4, caractérisé en ce que, après qu'on ait établi, par l'intermédiaire d'un capteur concerné, qu'une mastite est présente dans au moins un quart de pis du pis de l'animal, le lait produit par les trayons des quarts affectés est évacué.

6. Procédé selon l'une quelconque des revend ications 1 à 5, caractérisé en ce que le temps mort existant entre l'instant où l'un quelconque des gobelets trayeurs est connecté à un trayon concerné, et l'instant où l'écoulement de lait à partir de ce trayon a commencé, peut être déterminé par l'intermédiaire d'un ordinateur.

7. Procédé selon la revendication 6, caractérisé en ce qu'on établit, par l'intermédiaire de l'ordinateur, le temps mort existant entre l'instant où un capteur sensible à un vide a établi qu'il y a un vide suffisant dans un gobelet trayeur appliqué à un trayon concerné, et l'instant où le début d'un écoulement de lait à partir de ce trayon a été établi par l'intermédiaire d'un capteur sensible à un écoulement.

8. Procédé selon la revendication 6 ou 7, caractérisé en ce qu'on établit le temps mort pour l'écoulement de lait à partir de chacun des trayons.

9. Procédé selon l'une quelconque des revend ications 6 à 8, caractérisé en ce qu'on détermine, au moyen de l'ordinateur, de quelle valeur le temps mort dépasse une valeur prédéterminée pour un animal concerné.

10. Procédé selon la revendication 9, caractérisé en ce qu'on détermine de quelle valeur le temps mort dépasse la valeur prédéterminée pour chacun des écoulements de lait à partir des trayons respectifs.

11. Procédé selon l'une quelconque des revendications 6 à 10, caractérisé en ce que l'animal est guidé loin de l'emplacement où une telle traite automatique doit avoir lieu, lorsque, après la création d'un vide dans un gobelet trayeur, un temps particulier concernant le temps mort déterminé précédemment pour l'animal concerné s'est écoulé sans que l'écoulement de lait dans ce gobelet trayeur ait commencé.

12. Procédé selon l'une quelconque des revendications 6 à 11, caractérisé en ce qu'on obtient, par l'intermédiaire de l'ordinateur, une indication de l'état de chaleur ou de la maladie de l'animal à partir du temps mort.

13. Procédé selon la revendication 12, caractérisé en ce qu'on obtient une indication d'état de chaleur ou de maladie d'un animal à partir de paramètres, tels que le débit de l'écoulement de lait et/ou la production de lait et/ou le nombre de fois au cours d'une certaine période où un animal est entré dans le box de traite et/ou la quantité de nourriture consommée dans le box de traite, paramètres qui sont différents pour des animaux malades ou en chaleur de ceux d'animaux en bonne santé et pas en chaleur, et de manière possible en combinant un ou plusieurs de tels paramètres avec le temps mort, par l'intermédiaire d'un ordinateur.

14. Procédé selon la revendication 12 ou 13, caractérisé en ce que la température de chacun des écoulements de lait à partir des trayons respectifs est établie.

15. Procédé selon l'une quelconque des revendications 13 à 14, caractérisé en ce que la température d'un écoulement de lait est établie par l'intermédiaire d'un capteur sensible à la température à agencer dans l'écoulement de lait.

16. Procédé selon l'une quelconque des revendications 6 à 15, caractérisé en ce qu'un capteur sensible à un écoulement indique lorsqu'un écoulement de lait s'arrête à partir d'un trayon, le gobelet trayeur concerné étant déconnecté par l'intermédiaire d'un ordinateur après cette indication.

17. Procédé selon l'une quelconque des revendications 6 à 16, caractérisé en ce qu'on peut obtenir dans l'ordinateur une indication de mastite concernant un animal, par l'intermédiaire d'un capteur destiné à établir la conductivité électrique d'un écoulement de lait, et également si on le souhaite, par l'intermédiaire d'un capteur sensible à la température.

18. Procédé selon la revendication 17, caractérisé en ce que la conductivité électrique de l'écoulement de lait à partir de chacun des trayons est établie.

19. Procédé selon la revendication 17 ou 18, caractérisé en ce que qu'on établit dans l'ordinateur l'étendue selon laquelle la conductivité électrique d'un écoulement de lait dépasse, pour un animal concerné, une valeur de celle-ci déterminée précédemment.

20. Procédé selon la revendication 19, caractérisé en ce que, pour chacun des écoulements de lait à partir des trayons respectifs, l'étendue selon laquelle la conductivité électrique dépasse la valeur prédéterminée est établie.

21. Procédé selon l'une quelconque des revendications 9, 10, 19 ou 20, caractérisé en ce que la valeur prédéterminée est déterminée de manière répétée à nouveau par l'intermédiaire de la moyenne progressive des valeurs concernées établies dans la période immédiatement précédente.

22. Procédé selon l'une quelconque des revendications 17 à 21, caractérisé en ce que, à des instants pouvant être sélectionnés au hasard, l'écran d'affichage de l'ordinateur et/ou une imprimante peuvent indiquer les animaux dont le temps mort et/ou la conductivité électrique d'un écoulement de lait a/ont dépassé les valeurs prédéterminées respectives, et leur étendue.
